# EUROPEAN PATENT APPLICATION

(11) **EP 4 372 022 A1**
(43) Date of publication of application: **22.05.2024**
(21) Application number: 22876975.8
(22) Date of filing: 30.09.2022
(51) Int. Cl.: C08F 297/02, C08F 212/08, C08F 210/14, C08F 4/64, C08F 4/46

(54) **MULTI-BLOCK COPOLYMER AND PREPARATION METHOD THEREFOR**

(30) Priority: 01.10.2021 KR 20210130752; 29.09.2022 KR 20220124444
(71) Applicant: LG Chem, Ltd., Yeongdeungpo-gu Seoul 07336 (KR)
(72) Inventor: IM, Seul Ki, Daejeon 34122 (KR); LEE, Hyun Mo, Daejeon 34122 (KR); PARK, Ji Hyun, Daejeon 34122 (KR); SHIN, Eun Ji, Daejeon 34122 (KR); KIM, Yun Kon, Daejeon 34122 (KR); SA, Seok Pil, Daejeon 34122 (KR)
(74) Representative: Hoffmann Eitle
(86) International application number: PCT/KR2022/014832
(87) International publication number: WO 2023/055204

(57) **Abstract**

The present disclosure relates to a multi-block copolymer and a preparation method therefor, wherein the copolymer bears a polystyrene-based block and a polyolefin-based block and has a high molecular weight and a low content of homo-polystyrene.

## Description

### TECHNICAL FIELD

This application claims the benefit of Korean Patent Application Nos. 10-2021-0130752, filed on October 1, 2021, and 10-2022-0124444, filed on September 29, 2022, in the Korean Intellectual Property Office, the disclosures of which are incorporated herein in their entirety by reference.

The present invention relates to a multi-block copolymer and a method for preparing the same, and specifically, to a polyolefin-polystyrene-based multi-block copolymer including a polystyrene-based block and a polyolefin-based block, and a method for preparing the multi-block copolymer.

### BACKGROUND ART

A block copolymer is a material widely used not only in plastics for everyday use but also in high-tech devices, and thus the research and development has been actively conducted. Particularly, styrene-olefin copolymer resins including both polyolefin-based (POs) blocks and polystyrene-based (PSs) blocks have excellent properties such as heat resistance, light resistance, elasticity, and the like, and thus are usefully used in a wide variety of technical fields.

A polyolefin-polystyrene block copolymer, for example, styrene-ethylene-butylene-styrene (SEES) or styrene-ethylene-propylene-styrene (SEPS) is currently has a market of hundreds of thousands of tons worldwide. A representative example of styrene-olefin copolymer resins may be a polystyrene-block-poly(ethylene-co-1-butene)-block-polystyrene (SEES) triblock copolymer. The SEES triblock copolymer exhibits thermoplastic elastomer properties since a hard polystyrene domain in the structure is separated from a soft poly(ethylene-co-1-butene) matrix and acts as a physical cross-linking site. Due to these properties, the SEES is being more widely used in product groups which require rubber and plastics, and the demand of the SEES is significantly increasing significantly as the scope of use thereof is gradually expanding.

### [Prior Art Document]

### [Patent Document]

(Patent Document 1) Korean Patent Laid-Open Publication No. 10-1657925

### DISCLOSURE OF THE INVENTION

### TECHNICAL PROBLEM

An aspect of the present invention provides a multi-block copolymer including a polystyrene-based block and a polyolefin-based block, and more particularly, to a polyolefin-polystyrene-based multi-block copolymer having a high molecular weight and a low content of homo-polystyrene.

### TECHNICAL SOLUTION

According to an aspect of the present invention, there are provided a multi-block copolymer and a method for preparing the multi-block copolymer.
(1) The present invention provides a multi-block copolymer including a polystyrene-based block including a repeating unit derived from an aromatic vinyl-based monomer and a polyolefin-based block including a repeating unit derived from an ethylene and a repeating unit derived from an alpha-olefin-based monomer, wherein the fraction of a polystyrene homopolymer represented by Equation 1 below and measured from gel permeation chromatography (GPC) with respect to the polystyrene-based block is 4% or less, and the weight average molecular weight (MW) measured from gel permeation chromatography (GPC) is 100,000 to 300,000 g/mol. Fraction of homopolymer (area%) = Area of homo- polystyrene peak / (Area of polystyrene-based block peak + Area of homo-polystyrene peak) × 100 (%)
(2) In (1) above, the present invention provides a multi-block copolymer, wherein the alpha-olefin-based monomer is one or more selected from the group consisting of 1-hexene, 1-octene, 1-decene, 1-undecene, 1-dodecene, 1-tetradecene, 1-hexadecene, 1-eicosen, 4,4-dimethyl-1-pentene, 4,4-diethyl-1-hexene, and 3,4-dimethyl-1-hexene.
(3) In (1) or (2) above, the present invention provides a multi-block copolymer, wherein the fraction of a polystyrene homopolymer with respect to the polystyrene-based block measured from the gel permeation chromatography (GPC) is 3.80% or less.
(4) In any one of (1) to (3) above, the present invention provides a multi-block copolymer, wherein the molecular weight distribution measured from the gel permeation chromatography (GPC) is 1.5 to 3.0.
(5) In any one of (1) to (4) above, the present invention provides a multi-block copolymer, wherein the content of the repeating unit derived from the alpha-olefin-based monomer as measured by ¹H NMR (500 MHz, tetrachloroethane-d2, standard material TMS) spectrum is 10 mol% to 20 mol%.
(6) In any one of (1) to (5) above, the present invention provides a multi-block copolymer, wherein the content of the repeating unit derived from the alpha-olefin-based monomer as measured by ¹H NMR (500 MHz, tetrachloroethane-d2, standard material TMS) spectrum is 20 wt% to 40 wt%.
(7) The present invention provides a method for preparing a multi-block copolymer, the method including (S1) preparing a polyolefin-based block by reacting ethylene and an alpha-olefin-based monomer using an organozinc compound as a chain transfer agent in the presence of a catalyst composition including a transition metal compound, and (S2) preparing a multi-block copolymer by reacting an aromatic vinyl-based monomer with the polyolefin-based block in the presence of an anionic polymerization initiator.
(8) In (7) above, the present invention provides a method for preparing a multi-block copolymer, wherein the transition metal compound is a compound represented by Formula 1 below. 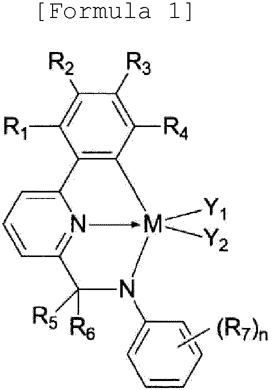 In Formula 1 above,
   M is Ti, Zr, or Hf,
   R₁ to R₄ are each independently hydrogen, a substituted or unsubstituted C1 to C20 alkyl group, a substituted or unsubstituted C3 to C20 cycloalkyl group, or a substituted or unsubstituted C6 to C20 aryl group, wherein two or more adjacent ones thereof may be connected to each other and form a ring,
   R₅ and R₆ are each independently hydrogen, a substituted or unsubstituted C1 to C20 alkyl group, a substituted or unsubstituted C3 to C20 cycloalkyl group, or a substituted or unsubstituted C6 to C20 aryl group, wherein the substitution is performed by a C1 to C12 alkyl group,
   R₇ is each independently a substituted or unsubstituted C4 to C20 alkyl group, a substituted or unsubstituted C4 to C20 cycloalkyl group, or a substituted or unsubstituted C6 to C20 aryl group,
   n is 1 to 5, and
   Y₁ and Y₂ are each independently a halogen group, a C1 to C20 alkyl group, a C2 to C20 alkenyl group, a C2 to C20 alkynyl group, a C3 to C20 cycloalkyl group, a C6 to C20 aryl group, a C7 to C20 alkylaryl group, a C7 to C20 arylalkyl group, a C5 to C20 heteroaryl group, a C1 to C20 alkoxy group, a substituted or unsubstituted C5 to C20 aryloxy group, a C1 to C20 alkylamino group, a C5 to C20 arylamino group, a C1 to C20 alkylthio group, a C5 to C20 arylthio group, a C1 to C20 alkylsilyl group, a C5 to C20 arylsilyl group, a hydroxyl group, an amino group, a thio group, a silyl group, a cyano group, or a nitro group.
(9) In (7) or (8) above, the present invention provides a method for preparing a multi-block copolymer, wherein the organozinc compound is represented by Formula 5 below. 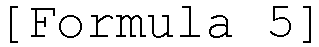 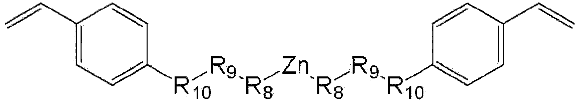 In Formula 5 above,
   R₈ and R₁₀ are each independently a single bond or a C1 to C10 alkylene group, R₉ is a C1 to C10 alkylene group or - SiR₁₁R₁₂-, and R₁₁ and R₁₂ are each independently a C1 to C10 alkyl group.
(10) In any one of (7) to (9) above, the present invention provides a method for preparing a multi-block copolymer, wherein the organozinc compound is prepared from the reaction of a Grignard reagent containing a styrene moiety with an alkyl zinc alkoxide.
(11) In any one of (7) to (11) above, the present invention provides a method for preparing a multi-block copolymer, wherein the Grignard reagent containing a styrene moiety is represented by Formula 7 below. 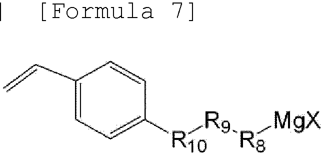 In Formula 7 above,
   R₈ and R₁₀ are each independently a single bond or a C1 to C10 alkylene group, R₉ is a C1 to C10 alkylene group or - SiR₁₁R₁₂-, R₁₁ and R₁₂ are each independently a C1 to C10 alkyl group, and X is a halogen group.
(12) In any one of (7) to (11) above, the present invention provides a method for preparing a multi-block copolymer, wherein the catalyst composition further includes a compound represented by Formula 9 below.

   [Formula 9] - [Al(Rₐ)-O]ₘ-

   In Formula 89 above,
   Rₐ is each independently a halogen radical, a C1 to C20 hydrocarbyl radical, or a C1 to C20 hydrocarbyl radical substituted with halogen, and
   m is an integer of 2 or greater.
(13) In any one of (7) to (12) above, the present invention provides a method for preparing a multi-block copolymer, wherein the anionic polymerization initiator comprises an alkyl lithium compound containing an allyl group, wherein the allyl group is combined with lithium.
(14) In any one of (7) to (13) above, the present invention provides a method for preparing a multi-block copolymer, wherein the alkyl lithium compound is represented by Formula 11 below. 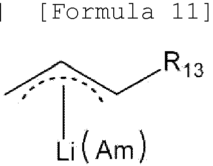 In Formula 11 above,
   R₁₃ is hydrogen or a C1 to C20 hydrocarbon, and
   Am is an amine-based compound represented by Formula 12 below.

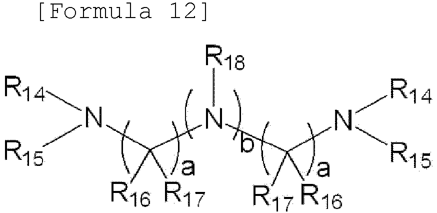

In Formula 12 above,
R₁₄ to R₁₈ are each independently hydrogen or a C1 to C20 hydrocarbon, and
a and b are each independently an integer of 0 to 3, wherein the a and the b are not simultaneously 0.

### ADVANTAGEOUS EFFECTS

A multi-block copolymer provided in the present invention has excellent mechanical properties such as tensile strength, elongation, and modulus, and thus may be usefully used in various industrial applications.

### MODE FOR CARRYING OUT THE INVENTION

Hereinafter, the present invention will be described in more detail to facilitate understanding of the present invention.

It will be understood that words or terms used in the description and claims of the present invention shall not be construed as being limited to having meanings defined in commonly used dictionaries. It will be further understood that the words or terms should be interpreted as having meanings that are consistent with their meanings in the context of the relevant art and the technical idea of the present invention, based on the principle that an inventor may properly define the meaning of the words or terms to best explain the present invention.

In the present specification, the term "alkyl" refers to a hydrocarbon moiety of a linear chain or a branched chain.

In the present specification, the term "cycloalkyl" refers to a cyclic hydrocarbon moiety, and the cyclic hydrocarbon includes a cyclic hydrocarbon such as a bicyclic hydrocarbon and a tricyclic hydrocarbon in which two or more cyclic hydrocarbons are fused.

In the present specification, the term "alkenyl" refers to an alkenyl group of a linear chain or a branched chain.

In the present specification, "aryl" is preferably C6 to C20, and may specifically be phenyl, naphthyl, anthracenyl, pyridyl, dimethylanilinyl, anisolyl, and the like, but is not limited thereto.

In the present specification, the term "alkylaryl" refers to an aryl group substituted by the above alkyl group.

In the present specification, the term "arylalkyl" refers to an alkyl group substituted by the above aryl group.

In the present specification, "alkylsilyl" may be silyl substituted with a C1 to C20 alkyl, and for example, may be trimethylsilyl or triethylsilyl.

In the present specification, the term "alkylamino" refers to an amino group substituted by the above alkyl group, and examples thereof include a dimethylamino group, a diethylamino group, and the like, but the present invention is not limited to the above examples.

In the present specification, unless otherwise stated, "hydrocarbyl" refers to a C1 to C20 monovalent hydrocarbon group composed only of carbon and hydrogen regardless of the structure thereof, such as alkyl, aryl, alkenyl, alkynyl, cycloalkyl, alkylaryl or arylalkyl.

In the present specification, the term "composition" includes not only a reaction product and a decomposition product formed from materials of a corresponding composition, but also a mixture of materials including the corresponding composition.

In the present specification, the term "polymer" refers to a polymer compound prepared by polymerizing monomers, whether of the same or different kinds. Thus, the generic term "polymer" covers the term "homopolymer" which is commonly used to refer to a polymer prepared from only one kind of monomer and the term "interpolymer" as defined below.

In the present specification, the term "interpolymer" refers to a polymer prepared by polymerizing at least two different kinds of monomers.

In this specification, the number 0 following the decimal point "." may be omitted.

Hereinafter, the present invention will be described in detail.

### Multi-block copolymer

A multi-block copolymer of the present invention is a polyolefin-polystyrene-based multi-block copolymer, which includes a polystyrene-based block including a repeating unit derived from an aromatic vinyl-based monomer and a polyolefin-based block including a repeating unit derived from an ethylene and a repeating unit derived from an alpha-olefin-based monomer, wherein the fraction of a polystyrene homopolymer represented by Equation 1 below and measured from gel permeation chromatography (GPC) with respect to the polystyrene-based block is 4% or less, and the weight average molecular weight (MW) measured from gel permeation chromatography (GPC) is 100,000 to 300,000 g/mol. Fraction of homopolymer (area%) = Area of homo- polystyrene peak / (Area of polystyrene-based block peak + Area of homo-polystyrene peak) × 100 (%)

The multi-block copolymer of the present invention is prepared by using a specific transition metal compound having a novel structure as a catalyst as to be described below, and has a high weight average molecular weight, which is an important factor in determining the physical properties of the copolymer, has a low content of homo-polyestyrene, and has excellent tensile properties (e.g., tensile strength, elongation, modulus, etc.) and excellent transparency even with a relatively small number of polyolefin branches.

In the multi-block copolymer of the present invention, the fraction of a polystyrene homopolymer with respect to the polystyrene-based block measured from the gel permeation chromatography (GPC) is 4% or less, and specifically, may be 0.10% or greater, 0.50% or greater, 0.60% to 4%, 3.80% or less, 3.00% or less, 2.50% or less, 2.20% or less, 2.00% or less, 1.90% or less, or 1.80% or less, and more specifically, may be 0.60% to 4%. The fraction of the polystyrene homopolymer with respect to the polystyrene-based block may be obtained through the area ratio of peaks in a chromatogram prepared using gel permeation chromatography, and specifically refers a ratio of the peak area represented by homo-polystyrene to the total peak area represented by a styrene-based polymer. The fraction of the polystyrene homopolymer with respect to the polystyrene-based block may be represented by Equation 1 below. Fraction of homopolymer (area%) = Area of homo- polystyrene peak / (Area of polystyrene-based block peak + Area of homo-polystyrene peak) × 100 (%)

The smaller the fraction of the polystyrene homopolymer included in the multi-block copolymer of the present invention, the greater the transparency of the multi-block copolymer. Therefore, when the polystyrene homopolymer satisfies a fraction range with respect to the polystyrene-based block, the multi-block copolymer may have high transparency.

The weight average molecular weight (MW) of the multi-block copolymer is 100,000 g/mol to 300,000 g/mol, and specifically, may be 105,000 g/mol or greater, 300,000 g/mol or less, or 250,000 g/mol or less, and more specifically, may be 120,000 g/mol to 200,000 g/mol.

The molecular weight distribution (PDI) of the multi-block copolymer is 1.5 to 3.0, and specifically, may be 1.52 or greater, 1.55 or greater, 1.58 or greater, 1.60 to 2.5, 2.3 or less, 2.1 or less, or 2.0 or less, and more specifically, may be 1.60 to 2.00.

The molecular weight distribution is calculated from the ratio of (weight average molecular weight)/(number average molecular weight), and the weight average molecular weight and number average molecular weight are polystyrene conversion molecular weights analyzed by gel permeation chromatography (GPC).

The multi-block copolymer of the present invention simultaneously satisfies the fraction of a polystyrene homopolymer and the weight average molecular weight (MW) in the above range, and may additionally satisfy the molecular weight distribution (PDI).

The polyolefin-polystyrene-based multi-block copolymer of the present invention includes a polystyrene-based block including a repeating unit derived from an aromatic vinyl-based monomer, and a polyolefin-based block including a repeating unit derived from an ethylene and a repeating unit derived from an alpha-olefin-based monomer, wherein the polyolefin-polystyrene-based multi-block copolymer necessarily includes a branched chain (branch) in which the polyolefin-based block of the multi-block copolymer is derived from a main chain, but includes fewer branches than a typical polyolefin-polystyrene-based block copolymer, specifically, a styrene-ethylene-butylene-styrene copolymer (SEES) and a styrene-ethylene-propylene-styrene copolymer (SEPS) prepared by two processes of typical anionic polymerization and hydrogenation reaction, while exhibiting excellent physical properties.

The multi-block copolymer of the present invention is a polyolefin-polystyrene-based multi-block copolymer which includes a polystyrene-based block including a repeating unit derived from an aromatic vinyl-based monomer and a polyolefin-based block including a repeating unit derived from an ethylene and a repeating unit derived from an alpha-olefin-based monomer, wherein the alpha-olefin-based monomer may be a C6 or greater alpha-olefin, specifically, a C8 or greater alpha-olefin, or a C8 to C20 alpha-olefin, and more specifically, a C8 to C14 alpha-olefin.

In one example of the present invention, examples of the alpha-olefin may include 1-hexene, 1-octene, 1-decene, 1-undecene, 1-dodecene, 1-tetradecene, 1-hexadecene, 1-eicosen, 4,4-dimethyl-1-pentene, 4,4-diethyl-1-hexene, 3,4-dimethyl-1-hexene, and the like, and more specifically, may be 1-octene.

The multi-block copolymer of the present invention may specifically be a polystyrene-poly(ethylene-co-1-hexene)-polystyrene block copolymer or a polystyrene-poly(ethylene-co-1-octene)-polystyrene block copolymer, and more specifically, may be a polystyrene-poly(ethylene-co-1-octene)-polystyrene block copolymer. As described above, in the multi-block copolymer of the present invention, a polyolefin-based block may include a branched chain derived from a C6 or greater alpha-olefin, specifically a branched chain derived from a C8 or greater alpha-olefin, such as 1-hexene, 1-octene, 1-decene, 1-undecene, 1 -dodecene, 1-tetradecene, 1-hexadecene, 1-eicosene, 4,4-dimethyl-1-pentene, 4,4-diethyl-1-hexene, or 3,4-dimethyl-1-hexene, specifically, 1-octene, 1-decene, 1-undecene, 1-dodecene, 1-tetradecene, 1-hexadecene, 1-eicosene, 4,4-dimethyl-1-pentene, 4,4-diethyl-1-hexene, or 3,4-dimethyl-1-hexene, more specifically 1-octene, and accordingly, the length of the branched chain is long, so that excellent physical properties may be exhibited even with a relatively small number of branched chains.

The multi-block copolymer of the present invention may have a content of the repeating unit derived from the alpha-olefin-based monomer of 10 mol% to 20 mol% as measured by ¹H NMR (500 MHz, tetrachloroethane-d2, standard TMS) spectrum, and specifically, the content of the repeating unit derived from the alpha-olefin-based monomer may be 10.5 mol% or greater, 11 mol% or greater, 12 mol% to 19 mol%, 18.5 mol% or less, 18 mol% or less, 17.5 mol% or less, or 17 mol% or less, and more specifically, may be 12 mol% to 17 mol%.

In addition, the multi-block copolymer of the present invention may have the content of the repeating unit derived from the alpha-olefin-based monomer of 20 wt% to 40 wt% as measured by ¹H NMR (500 MHz, tetrachloroethane-d2, standard TMS) spectrum, and specifically, the content of the repeating unit derived from the alpha-olefin-based monomer may be 21 wt% or greater, 21.5 wt% or greater, 22 wt% or greater, 22.5 wt% or greater, 23 wt% to 39 wt%, 38.5 wt% or less, or 38 wt% or less, and more specifically, may be 23 wt% to 38 wt%.

When the content of the repeating unit derived from the alpha-olefin-based monomer satisfies the above mol% range and the wt% range, the multi-block copolymer may exhibit further excellent elongation and tensile strength.

In one example of the present invention, the aromatic vinyl-based monomer may be a C6 to C20 aromatic vinyl-based monomer. For example, the aromatic vinyl-based monomer may be an aromatic vinyl-based monomer including ethylene substituted with a C6 to C20 aryl group, ethylene substituted with a phenyl group, and the like, specifically styrene, α-methyl styrene, vinyl toluene, alkyl styrene substituted with a C₁₋₃ alkyl group (e.g., o-methyl styrene, m-methyl styrene, p-methyl styrene, p-ethyl styrene, etc.) or styrene substituted with halogen, and more specifically styrene.

The multi-block copolymer of the present invention may have a content of the repeating unit derived from the aromatic vinyl-based monomer of 5 mol% to 20 mol% as measured by ¹H NMR (500 MHz, tetrachloroethane-d2, standard TMS) spectrum, and specifically, the content of the repeating unit derived from the aromatic vinyl-based monomer may be 6 mol% or greater, 6.5 mol% or greater, 7 mol% or greater, 7.5 mol% or greater, 8 mol% or greater, 8.1 mol% or greater, 8.2 mol% to 19 mol%, 18 mol% or less, 17 mol%, 16.5 mol% or less, 16 mol% or less, 15.8 mol% or less, or 15.5 mol% or less, and more specifically, 8.2 mol% to 15.8 mol%.

In addition, the multi-block copolymer of the present invention may have the content of the repeating unit derived from the aromatic vinyl-based monomer of 15 wt% to 35 wt% as measured by ¹H NMR (500 MHz, tetrachloroethane-d2, standard TMS) spectrum, and specifically, the content of the repeating unit derived from the aromatic vinyl-based monomer may be 16 wt% or greater, 16.5 wt% or greater, 17 wt% or greater, 17.5 wt% or greater, 18 wt% to 34 wt%, 33.5 wt% or less, 33 wt% or less, 32.5 wt% or less, 32 wt% or less, or 31 wt% or less, and more specifically, may be 18 wt% to 32 wt%.

When the content of the repeating unit derived from the aromatic vinyl-based monomer satisfies the above mol% range and the wt% range, the multi-block copolymer may exhibit further excellent transparency.

### Method for preparing multi-block copolymer

A method for preparing a multi-block copolymer of the present invention includes (S1) preparing a polyolefin-based block by reacting ethylene and an alpha-olefin-based monomer using an organozinc compound as a chain transfer agent in the presence of a catalyst composition including a transition metal compound, and (S2) preparing a multi-block copolymer by reacting an aromatic vinyl-based monomer with the polyolefin-based block in the presence of an alkyl lithium compound and an amine-based compound.

### Step (S1)

Step (S1) is a step of preparing a polyolefin-based block by reacting ethylene and an alpha-olefin-based monomer using an organozinc compound as a chain transfer agent in the presence of a catalyst composition including a transition metal compound.

According to an embodiment of the present invention, the transition metal catalyst is a catalyst for growing an olefin-based polymer through coordinative chain transfer polymerization, and may be a catalyst composition including a main catalyst, which is a transition metal, and a co-catalyst, wherein the co-catalyst may be an organoaluminum or a boron compound.

In the present invention, the transition metal compound may be a compound represented by Formula 1 below.

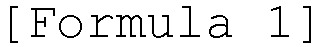

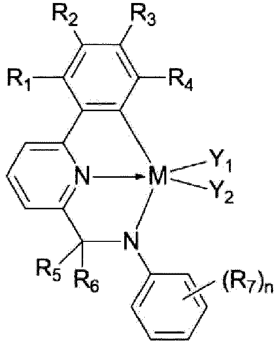

In Formula 1 above,
M is Ti, Zr, or Hf,
R₁ to R₄ are each independently hydrogen; a substituted or unsubstituted C1 to C20 alkyl group; a substituted or unsubstituted C3 to C20 cycloalkyl group, or a substituted or unsubstituted C6 to C20 aryl group, wherein two or more adjacent ones thereof may be connected to each other and form a ring,
R₅ and R₆ are each independently hydrogen, a substituted or unsubstituted C1 to C20 alkyl group, a substituted or unsubstituted C3 to C20 cycloalkyl group, or a substituted or unsubstituted C6 to C20 aryl group, wherein the substitution is performed by a C1 to C12 alkyl group,
R₇ is each independently a substituted or unsubstituted C4 to C20 alkyl group, a substituted or unsubstituted C4 to C20 cycloalkyl group, or a substituted or unsubstituted C6 to C20 aryl group, and
n is 1 to 5, and
Y₁ and Y₂ are each independently a halogen group, a C1 to C20 alkyl group, a C2 to C20 alkenyl group, a C2 to C20 alkynyl group, a C3 to C20 cycloalkyl group, a C6 to C20 aryl group, a C7 to C20 alkylaryl group, a C7 to C20 arylalkyl group, a C5 to C20 heteroaryl group, a C1 to C20 alkoxy group, a substituted or unsubstituted C5 to C20 aryloxy group, a C1 to C20 alkylamino group, a C5 to C20 arylamino group, a C1 to C20 alkylthio group, a C5 to C20 arylthio group, a C1 to C20 alkylsilyl group, a C5 to C20 arylsilyl group, a hydroxyl group, an amino group, a thiol group, a silyl group, a cyano group, or a nitro group.

### Specifically, in Formula 1 above, M may be Hf.

In addition, specifically, in Formula 1 above, R₁ to R₄ are each independently hydrogen, or a substituted or unsubstituted C1 to C20 alkyl group, wherein two or more adjacent ones thereof may be connected to each other and form a ring. Alternatively, R₁ and R₂ are each independently a C1 to C20 alkyl group, which may be connected to each other and form a C5 to C20 aromatic ring, and R₃ and R₄ may be hydrogen.

In addition, specifically, in Formula 1 above, R₅ and R₆ are each independently hydrogen, or a substituted or unsubstituted C6 to C20 an aryl group, wherein the substitution may performed by a C1 to C6 alkyl group.

In addition, specifically, in Formula 1 above, R₇ may each independently be a substituted or unsubstituted C4 to C20 alkyl group, a substituted or unsubstituted C4 to C20 cycloalkyl group, or a substituted or unsubstituted C6 to C20 aryl group.

Specifically, in Formula 1 above, n may be 1 to 3, preferably 2.

Specifically, in Formula 1 above, Y₁ and Y₂ may each independently be a C1 to C20 alkyl group.

More specifically, the transition metal compound represented by Formula 1 above may be a compound represented by Formula 1a below.

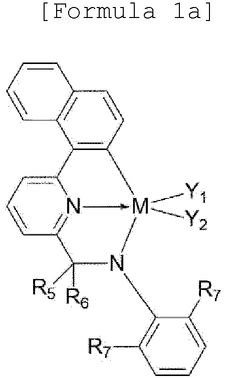

In Formula 1a above,
M, R₅ to R₇, and Y₁ and Y₂ are the same as defined above.

The transition metal compound represented by Formula 1 above may specifically be selected from the following compounds, but is not limited thereto. All transition metal compounds corresponding to Formula 1 are included in the present invention.

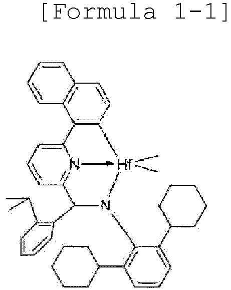

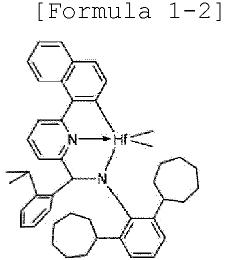

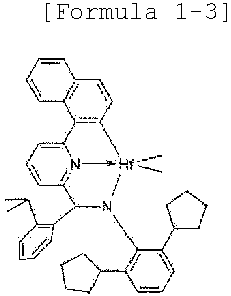

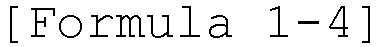

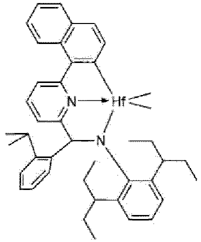

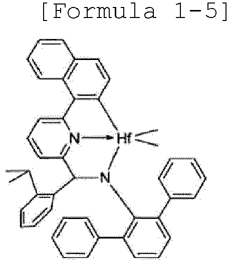

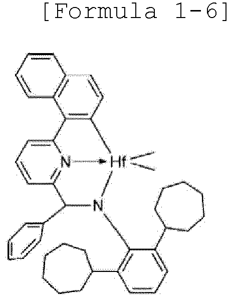

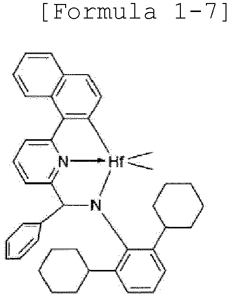

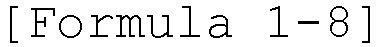

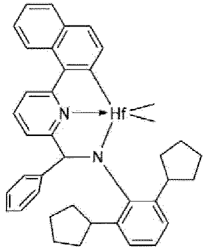

In addition, the present invention provides a ligand compound represented by Formula 2 below.

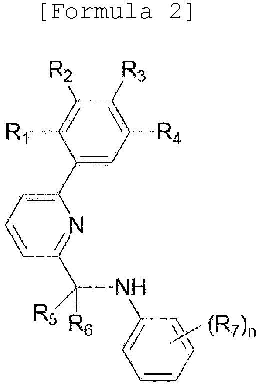

In Formula 2 above,
R₁ to R₄ are each independently a substituted or unsubstituted C1 to C20 alkyl group, a substituted or unsubstituted C3 to C20 cycloalkyl group, or a substituted or unsubstituted C6 to C20 aryl group, wherein two or more adjacent ones thereof may be connected to each other and form a ring,
R₅ and R₆ are each independently hydrogen, a substituted or unsubstituted C1 to C20 alkyl group, a substituted or unsubstituted C3 to C20 cycloalkyl group, or a substituted or unsubstituted C6 to C20 aryl group, wherein the substitution is performed by a C1 to C12 alkyl group,
R₇ is each independently a substituted or unsubstituted C4 to C20 alkyl group, a substituted or unsubstituted C4 to C20 cycloalkyl group, or a substituted or unsubstituted C6 to C20 aryl group, and
n is 1 to 5.

That is, the transition metal compound of the present invention may be prepared by including a step of reacting a ligand compound represented by Formula 2 below and a compound represented by Formula 3 below.

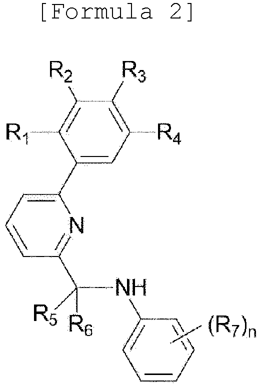

[Formula 3] M(Y₁Y₂)₂

In the above formulas,
R₁ to R₇, M, and Y₁ and Y₂ are the same as defined above.

Meanwhile, when preparing the transition metal compound represented by Formula 1 of the present invention, the reaction may be performed by the following process.

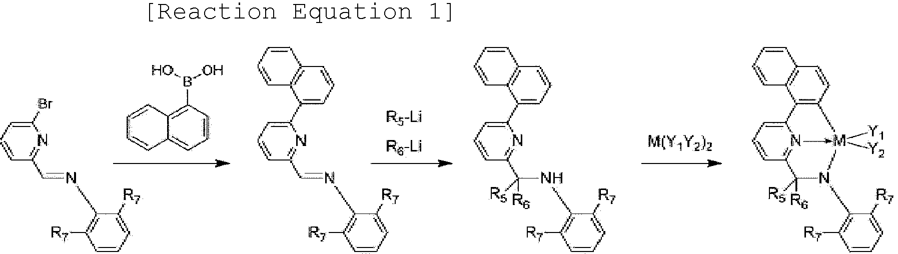

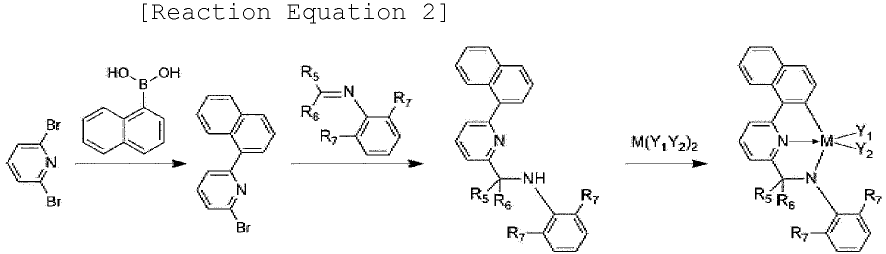

In the present invention, the organozinc compound is a material used as a chain transfer agent to induce chain transfer during the preparation in a polymerization reaction such that a copolymer is prepared, wherein the chain transfer agent may be a chain transfer agent for preparing a block copolymer by coordinative chain transfer polymerization.

In one example of the present invention, the chain transfer agent may include an organozinc compound represented by Formula 5 below, and specifically, the chain transfer agent may include 96 mol% or greater of the organozinc compound represented by Formula 5 below, and preferably the chain transfer agent may not include any side reaction products in addition to the organozinc compound represented by Formula 5 below.

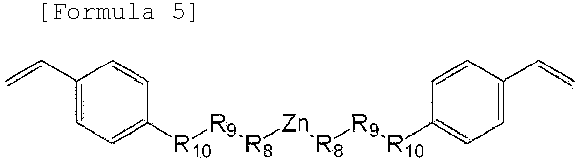

In Formula 5 above,

R₈ and R₁₀ may each independently be a single bond or a C1 to C10 alkylene group, R₉ may be a C1 to C10 alkylene group or -SiR₁₁R₁₂-, and R₁₁ and R₁₂ may each be independently a C1 to C10 alkyl group.

In addition, according to an embodiment of the present invention, in Formula 5 above, R₈ and R₁₀ may each independently be a single bond or a C1 alkylene group, R₉ may be a C1 alkylene group or -SiR₁₁R₁₂-, and R₁₁ and R₁₂ may each independently be a C1 alkyl group.

According to an embodiment of the present invention, the organozinc compound represented by Formula 5 above may be one selected from the group consisting of organozinc compounds represented by Formulas 5-1 to 5-4, and preferably any one of Formulas 5-3 and 5-4.

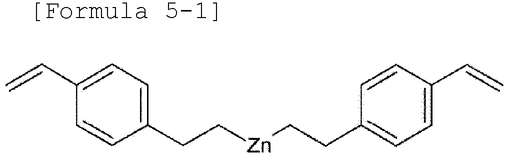

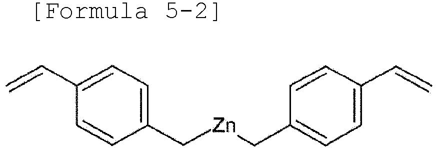

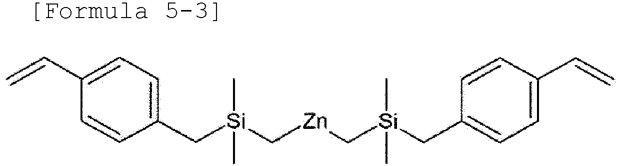

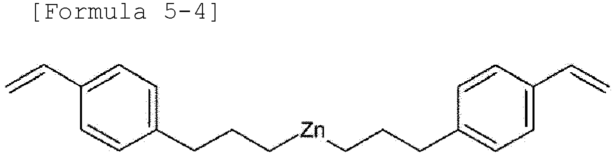

According to an embodiment of the present invention, the chain transfer agent may include 97 mol% or greater of the organozinc compound Formula 5 above, more preferably 98 mol% or greater, or 99 mol% or greater, and most preferably, may not include any side reaction products in addition to the organozinc compound. This means that the chain transfer agent does not include any side reaction products such as a dimer in addition to the organozinc compound represented by Formula 5, as well as impurities containing chlorine or magnesium. That is, the chain transfer agent may include only the organozinc compound represented by Formula 5 above.

When ethylene and an alpha-olefin-based monomer are reacted using the organozinc compound represented by Formula 5 above as a chain transfer agent in the presence of a catalyst composition including a transition metal compound, the ethylene and the alpha-olefin-based monomer are inserted between zinc (Zn) and R₁₀ of the organozinc compound, so that polymerization may be performed. In one example of the method for preparing a multi-block copolymer of the present invention, when a polyolefin-based block is prepared by reacting ethylene and an alpha-olefin-based monomer using the compound of Formula 5above as the organozinc compound, an olefin-based polymer block intermediate is prepared, and an example of the olefin-based polymer block intermediate may be represented by Formula 6 below.

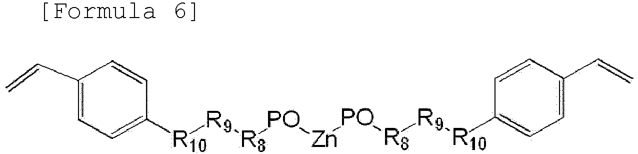

In Formula 6 above, R₈ and R₁₀ may each independently be a single bond or a C1 to C10 alkylene group, R₉ may be a C1 to C10 alkylene group or -SiR₁₁R₁₂-, R₁₁ and R₁₂ may each independently be a C1 to C10 alkyl group, and PO may be an olefin-based polymer block.

According to an embodiment of the present invention, the organozinc compound may be prepared by a preparation method including steps of preparing a Grignard reagent containing a styrene moiety, and reacting the prepared Grignard reagent with a zinc compound to prepare an organozinc compound represented by Formula 5 above, and the organozinc compound may be alkyl zinc alkoxide.

According to an embodiment of the present invention, the organozinc compound represented by Formula 5 above prepared according to the preparation method of an organozinc compound is synthesized as a single compound, and thus does not include any side reaction products such as a dimer, and furthermore, does not include impurities containing chlorine, which may act as a catalytic poison, such as organic zinc chloride (R-Zn-Cl). In addition, when an organozinc compound represented by Formula 5 above is prepared according to the preparation method of an organozinc compound, the organozinc compound is synthesized as a single compound, so that there is an effect in that synthesis reproducibility is excellent. Meanwhile, when preparing an organozinc compound, in order not to include side reaction products and impurities as in the present invention, it may be important to select a Grignard reagent containing a styrene moiety and a zinc compound.

According to an embodiment of the present invention, the Grignard reagent containing a styrene moiety may be represented by Formula 7 below.

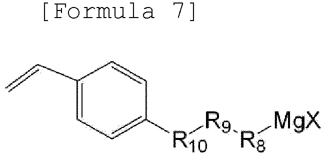

In Formula 7 above, R₈ and R₁₀ may each independently be a single bond or a C1 to C10 alkylene group, R₉ may be a C1 to C10 alkylene group or -SiR₁₁R₁₂-, R₁₁ and R₁₂ may each independently be a C1 to C10 alkyl group, and X may be a halogen group.

In addition, according to an embodiment of the present invention, in Formula 7 above, R₈ and R₁₀ may each independently be a single bond or a C1 alkylene group, R₉ may be a C1 alkylene group or -SiR₁₁R₁₂-, and R₁₁ and R₁₂ may each independently be a C1 alkyl group.

According to an embodiment of the present invention, the Grignard reagent containing a styrene moiety and represented by Formula 7 above may be one selected from the group consisting of Grignard reagents each containing a styrene moiety represented by Formulas 7-1 to 7-4 below.

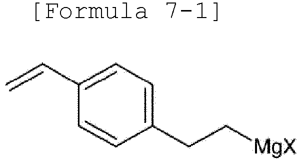

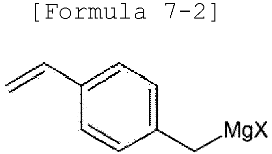

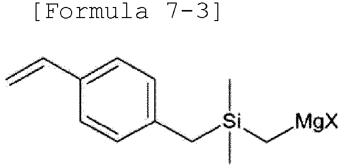

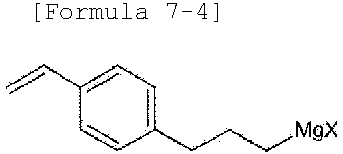

According to an embodiment of the present invention, the Grignard reagent containing a styrene moiety and represented by Formula 7 above may be prepared through a reaction between a halide in which halide (-X) is substituted for R₈ and magnesium, specifically, magnesium powder or a magnesium metal.

According to an embodiment of the present invention, the Grignard reagent containing a styrene moiety and represented by Formula 7 above may be prepared through a reaction between a compound represented by Formula 8 below and magnesium, specifically, magnesium powder or a magnesium metal.

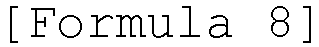

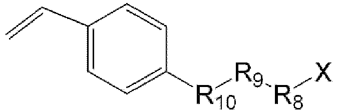

In Formula 8 above, R₈ and R₁₀ may each independently be a single bond or a C1 to C10 alkylene group, R₉ may be a C1 to C10 alkylene group or -SiR₁₁R₁₂-, R₁₁ and R₁₂ may each independently be a C1 to C10 alkyl group, and X may be a halogen group.

According to an embodiment of the present invention, in Formula 8 above, R₈ and R₁₀ may each independently be a single bond or a C1 to C3 alkylene group, R₉ may be a C1 to C3 alkylene group or -SiR₁₁R₁₂-, R₁₁ and R₁₂ may each independently be a C1 to C3 alkyl group, and X may be a halogen group.

In addition, according to an embodiment of the present invention, in Formula 8 above, R₈ and R₁₀ may each independently be a single bond or a C1 alkylene group, R₉ may be a C1 alkylene group or -SiR₁₁R₁₂-, R₁₁ and R₁₂ may each independently be a C1 alkyl group, and X may be one halogen group selected from the group consisting of Cl, Br, and I.

According to an embodiment of the present invention, a compound represented by Formula 8 above may be one selected from the group consisting of compounds represented by Formulas 8-1 to 8-4 below.

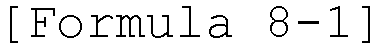

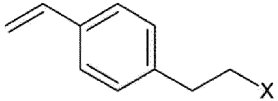

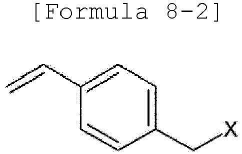

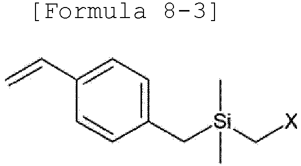

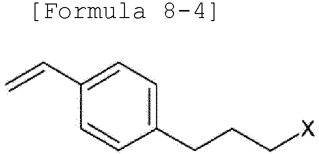

According to an embodiment of the present invention, when preparing the Grignard reagent containing a styrene moiety and represented by Formula 7 above, the reaction between the compound represented by Formula 8 above and the magnesium powder or magnesium metal may be performed at an excessive mole percent of magnesium powder or magnesium metal to 1 mole of the compound represented by the Formula 8 above based on a mole percent, that is, at a mole percent of greater than 1 mole, and in this case, 50 mol% or greater, 60 mol% or greater, 70 mol% or greater, 80 mol% or greater, 90 mol% or greater, 95 mol% or greater, or 99 mol% or greater of the compound represented by Formula 8 above may be converted into a Grignard reagent containing a styrene moiety.

According to an embodiment of the present invention, the reaction between the compound represented by Formula 8 above and the magnesium powder or magnesium metal may be performed at a molar ratio of greater than 1:1 to 1:10, greater than 1:1 to 1:5, greater than 1:1 to 1:2, or 1:1.01 to 1:1.60 based on the molar ratio, and within this range, the conversion rate to the Grignard reagent containing a styrene moiety and represented by Formula 7 above is high, while the content of residual magnesium after the reaction is minimized to facilitate the removal of residual magnesium powder or magnesium metal.

According to an embodiment of the present invention, when preparing an organozinc compound, the zinc compound is required to be a zinc compound capable of inducing substitution of two organic groups of the same type with zinc based on zinc. Therefore, zinc chloride (ZnCl₂) may be easily considered, but when zinc chloride is used as a zinc compound, there is a problem in that impurities (e.g., alkyl zinc chloride) containing chlorine, which may act as a catalytic poison, remain. Therefore, in the present invention, alkyl zinc alkoxide is used as the zinc compound.

According to an embodiment of the present invention, the alkyl group of the alkyl zinc alkoxide may be a C1 to C10 alkyl group, a C1 to C5 alkyl group, a C1 to C3 alkyl group, or an ethyl group, and the alkoxide group may be a C1 to C10 alkoxide group, a C1 to C5 alkoxide group, a C1 to C3 alkoxide group, or a methoxide group. As a specific example, the zinc compound may be ethyl zinc methoxide.

According to an embodiment of the present invention, the alkyl zinc alkoxide may be prepared from dialkyl zinc. As a specific example, the alkyl zinc alkoxide may be prepared by reacting dialkyl zinc with alcohol in-situ. At this time, the alkyl group of the dialkyl zinc may be the same as the alkyl group of the alkyl zinc alkoxide described above, and the alcohol may be an alcohol in which hydrogen is bonded to the alkoxide group of the alkyl zinc alkoxide described above.

According to an embodiment of the present invention, when the alkyl zinc alkoxide is used as the zinc compound, during the reaction of the Grignard reagent and the zinc compound, a magnesium halide alkoxide is generated, which is an insoluble salt that is easily filtered, so that it is possible to prevent impurities from remaining.

According to an embodiment of the present invention, the reaction between the Grignard reagent and the zinc compound may be performed at a molar ratio of 10:1 to 1:10, 5:1 to 1:5, 3:1 to 1:3, 2:1 to 1:2, 1.5:1 to 1:1.5, or 1:1 based on the molar ratio, and within this range, the organozinc compound is synthesized as a single compound, and thus does not include any side reaction products such as a dimer, and does not include impurities containing chlorine, which may act as a catalytic poison, and has an effect of easily removing impurities containing magnesium, which may act as a catalytic poison.

According to an embodiment of the present invention, all the steps and all the reaction of the preparation method of the zinc compound may be performed in an organic solvent, and the reaction temperature and reaction pressure may be adjusted according to the purpose of increasing yield and purity.

The preparation method of the zinc compound according to an embodiment of the present invention replaces a borane-based compound containing a typical styrene moiety with a Grignard reagent containing a styrene moiety, and replaces alkyl zinc or zinc chloride with alkyl zinc alkoxide, so that a catalytic poison may be completely removed.

In addition, through the improvement of the above method, unlike the prior art in which a product is obtained as a mixture of a dimer, a trimer, and a zinc compound with saturated ends, a compound in the form of a monomer with fully preserved end vinyl may be obtained as a single compound, so that not only the storage stability of a zinc compound is improved, but also the physical properties of a final compound are improved, and it is possible to achieve an effect of greatly reducing the production amount of diblock copolymers rather than a triblock copolymers.

In addition, the catalyst composition may further include a compound represented by Formula 9 below, and the compound represented by Formula 9 above may serve as a co-catalyst, a scavenger, or both.

[Formula 9] - [Al(Rₐ)-O]ₘ-

In Formula 9 above,
Rₐ is each independently a halogen radical, a hydrocarbyl radical having 1 to 20 carbon atoms, or a hydrocarbyl radical having 1 to 20 carbon atoms substituted with halogen,
m is an integer of 2 or greater.

The compound represented by Formula 9 above is not particularly limited as long as it is alkyl aluminoxane. Preferred examples include modified methylaluminoxane (MMAO), methylaluminoxane (MAO), ethylaluminoxane, isobutylaluminoxane, butylaluminoxane, and the like, and a particularly preferred compound may be modified methylaluminoxane (MMAO).

The compound represented by Formula 9 above is a compound in the form of an oligomer generated by the reaction of alkyl aluminum and water, and when the compound is used as a co-catalyst, chain transfer is reduced. Therefore, a high molecular weight copolymer may be prepared, and the generation of homo-polyolefin as a side reaction may also be prevented. Therefore, in the end, a polyolefin-polystyrene-based multi-block copolymer exhibiting excellent physical properties such as high tensile strength may be prepared.

Meanwhile, while the compound represented by Formula 9 above may inhibit chain transfer as described above, if a compound such as alkyl aluminum is used as a co-catalyst, chain transfer occurs a lot, so that the molecular weight of a copolymer is lowered and the generation of homo-polyolefin is increased, which may cause a problem in which the physical properties of a block copolymer are degraded.

As described above, in the present invention, a transition metal compound represented by Formula 1 and a compound represented by Formula 9 are used in combination, so that a multi-block copolymer satisfying the aforementioned conditions may be prepared.

In addition, the transition metal compound represented by Formula 1 above and the compound represented by Formula 9 above may also be used in a form supported in a carrier. As the carrier, silica or alumina may be used, but the carrier is not limited thereto.

In addition, the catalyst composition may further include a compound represented by Formula 10 below.

[Formula 10] [L-H]⁺[Z(A)₄]⁻ or [L]⁺[Z(A)₄]⁻

In Formula 10 above,
Z is a Group 13 element,
A is each independently a C6 to C20 aryl in which one or more hydrogen atoms may be substituted with a substituent, or a C1 to C20 alkyl, and
the substituent of A is halogen, a C1 to C20 hydrocarbyl, a C1 to C20 alkoxy, or a C6 to C20 aryloxy.

Step (S1) may be performed, for example, in a uniform solution state. At this time, as a solvent, a hydrocarbon solvent or olefin monomer itself may be used as a medium. The hydrocarbon solvent may be a C4 to C20 aliphatic hydrocarbon solvent, specifically isobutane, hexane, cyclohexane, methylcyclohexane, and the like. The solvent may be used alone, or in combination of two or more thereof.

The polymerization temperature of Step (S1) may vary depending on reaction materials, reaction conditions, and the like, but may specifically be 70 to 170°C, specifically 80 to 150°C, or 90 to 120°C. Within the above range, the solubility of a polymer may be increased and a catalyst may be thermally stabilized.

The polymerization of Step (S1) may be performed in a batch, semi-continuous, or continuous manner, and may also be performed in two or more steps having different reaction conditions.

A compound prepared by the above-described Step (S1) may serve as a precursor for preparing the polyolefin-polystyrene-based multi-block copolymer of the present invention by an anionic polymerization reaction of Step (S2) to be described later.

In one example of the present invention, the alpha-olefin-based monomer may be a C5 to C20 alpha-olefin, and specifically, may be a C5 to C14 alpha-olefin.

In one example of the present invention, the alpha-olefin may be one or more selected from the group consisting of 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene, and 3,4-dimethyl-1-hexene, and more specifically, may be 1-hexene.

### Step (S2)

Step (S2) is a step of preparing a multi-block copolymer by reacting an aromatic vinyl-based monomer with the polyolefin-based block in the presence of an anionic polymerization initiator.

In Step (S2), an aromatic vinyl-based monomer is continuously inserted between a zinc-carbon bond of (polyolefinyl)₂Zn included in the compound formed by the above-described Step (S1), so that a polystyrene-based chain may be formed, and at the same time, a styrene group derived from a chain extender present at an end of the compound formed by Step (S1) may participate as a copolymerization site with the aromatic vinyl-based monomer to be connected to the polystyrene-based chain. In addition, a multi-block copolymer prepared through the above process may be easily quenched by the reaction of an end group with water, oxygen, or an organic acid, through which the multi-block copolymer is converted into an industrially useful polyolefin-polystyrene-based multi-block copolymer.

The aromatic vinyl-based monomer may be a C6 to C20 aromatic vinyl-based monomer. For example, the aromatic vinyl-based monomer may be an aromatic vinyl-based monomer including ethylene substituted with a C6 to C20 aryl group, ethylene substituted with a phenyl group, and the like, specifically styrene, α-methyl styrene, vinyl toluene, alkyl styrene substituted with a C₁₋₃ alkyl group (e.g., o-methyl styrene, m-methyl styrene, p-methyl styrene, p-ethyl styrene, etc.) or styrene substituted with halogen, and more specifically styrene.

In one example of the present invention, the anionic polymerization initiator may be an alkyl lithium compound represented by Formula 11 below.

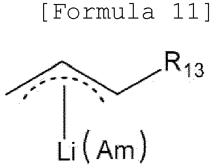

In Formula 11 above,
R₁₃ is hydrogen or a C1 to C20 hydrocarbon, and
Am is an amine-based compound represented by Formula 12 below.

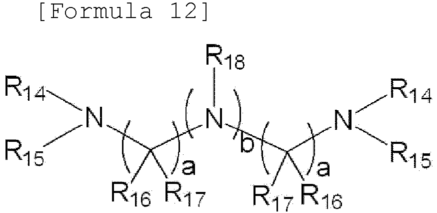

In Formula 12 above,
R₁₄ to R₁₈ are each independently hydrogen or a C1 to C20 hydrocarbon, and
a and b are each independently an integer of 0 to 3, wherein the a and the b are not simultaneously 0.

In one example of the present invention, R₁₃ may be hydrogen, a C1 to C20 alkyl, a C3 to C20 cycloalky, or a substituted or unsubstituted C7 to C20 arylalkyl,
R₁₄ to R₁₈ may each independently be hydrogen, a C1 to C20 alkyl, a C1 to C20 alkenyl, a C3 to C20 cycloalkyl, a substituted or unsubstituted C6 to C20 aryl, or a substituted or unsubstituted C7 to C20 arylalkyl, and
a and b may each independently be an integer of 0 to 2.

In addition, in one example of the present invention, R₁₃ to R₁₈ may each independently be hydrogen or a C1 to C20 alkyl, wherein a may be 1 or 2, and b may be 0 or 1.

Specifically, a may be an integer of 1 to 3, and b may be an integer of 0 to 3, and more specifically, a may be 1 or 2, and b may be an integer of 0 to 2, and even more specifically, a may be 1 or 2, and b may be 0 or 1.

In one example of the present invention, in Formula 11 above, Am may specifically be represented by Formulas 13 or 14 below.

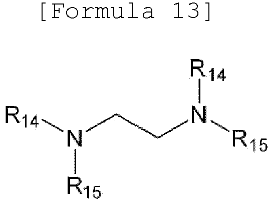

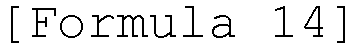

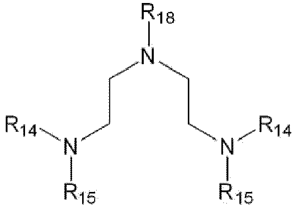

In the above formulas,
R₁₄, R₁₅, and R₁₈ are each independently hydrogen or a C1 to C20 alkyl.

In addition, in one example of the present invention, in Formula 11 above, Am may specifically be represented by Formulas 13a or Formula 14a below.

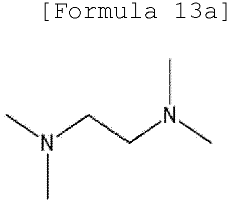

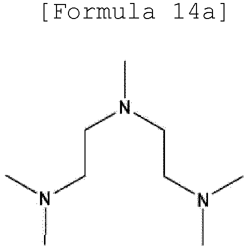

In the method for preparing a multi-block copolymer of the present invention, the compound represented by Formula 11 above is used as an anionic polymerization initiator, so that a polystyrene-based chain may be grown from polyolefin of (polyolephinyl)₂Zn in which a polyolefin-based chain has grown around the organozinc compound, zinc (Zn) in particular, prepared in Step S1. As described above, in the method for preparing a multi-block copolymer of the present invention, a polystyrene-polyolefin-polystyrene multi-block copolymer may be prepared by growing the polystyrene-based chain at both ends of a polyolefin chain, so that the prepared multi-block copolymer may have a structure close to symmetry, and may have a uniform polystyrene domain size.

The anionic polymerization initiator may be prepared by the following preparation method.

A method for preparing the anionic polymerization initiator includes a process of performing a reaction by introducing a compound represented by Formula 16 below and a compound represented by Formula 12 in the presence of a compound represented by Formula 15 below.

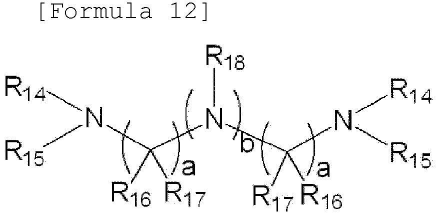

[Formula 15] B-Li

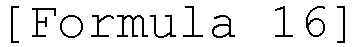

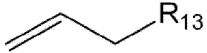

In the above formulas,
R₁₃ to R₁₈ are each independently hydrogen or a C1 to C20 hydrocarbon,
a and b are each independently an integer of 0 to 3, wherein the a and the b are not simultaneously 0, and
B is a C1 to C20 alkyl.

In one example of the present invention, R₁₃ may be hydrogen or a C1 to C20 hydrocarbon, R₁₄ to R₁₈ may each independently be hydrogen, a C1 to C20 alkyl, a C1 to C20 alkenyl, a C3 to C20 cycloalkyl, a substituted or unsubstituted C6 to C20 aryl, or a substituted or unsubstituted C7 to C20 aryl alkyl, and a and b may each independently be an integer of 0 to 2, and B may be a C1 to C12 alkyl.

In addition, in one example of the present invention, R₁₄ to R₁₈ may each independently be hydrogen or a C1 to C20 alkyl, a may be an integer of 1 or 2, b may be an integer of 0 or 1, and B may be a C1 to C8 alkyl.

Specifically, a may be an integer of 1 to 3, and b may be an integer of 0 to 3, and more specifically, a may be 1 or 2, and b may be an integer of 0 to 2, and even more specifically, a may be 1 or 2, and b may be 0 or 1.

An alkyl lithium compound represented by Formula 16 above may be, for example, n-BuLi, wherein n-BuLi is a material widely used as an initiator of anionic polymerization, and is easy to obtain and has excellent unit cost efficiency.

In the method for preparing the anionic polymerization initiator, the process of reacting a compound represented by Formula 16 above with a compound represented by Formula 15 above may be performed first, and thereafter, a compound of Formula 12 may be reacted therewith to prepare a compound of Formula 11 above. Specifically, a compound represented by Formula 16 above is reacted with a compound represented by Formula 15 above to produce allyl lithium is an intermediate, and the allyl lithium is reacted with a compound of Formula 12 to finally form an anionic polymerization initiator of Formula 11 above.

In addition, the process of performing a reaction by introducing a compound represented by Formula 16 above and a compound represented by Formula 12 above in the presence of a compound represented by Formula 15 above may be performed under a condition of no additional solvent. The condition of no additional solvent means that, in the presence of the compound represented by Formula 16 above, there is no separate compound which may be used as a solvent in addition to the compound represented by Formula 15 above and the compound represented by Formula 12 above, or means that, an additional solvent is present in a trace amount, and thus does not significantly react with the compound of Formula 15 above.

When the reaction is performed under condition of no additional solvent, the reaction of the compound represented by Formula 15 and the compound represented by Formula 16 above is performed as a main reaction, so that the anionic polymerization initiator of Formula 11 above may be effectively prepared. When there is a separate solvent, the anionic polymerization initiator of Formula 11 above, a compound produced by reacting the compound represented by Formula 15 above with the compound represented by Formula 12 above, and a compound decomposed from the compound produced by reacting the compound represented by Formula 15 above with the compound represented by Formula 12 above are all mixed and present, and thus it is not effective.

### Examples

Hereinafter, the present invention will be described in detail with reference to examples. However, the following examples are merely illustrative of the present invention and are not intended to limit the scope of the present invention.

### Reagent and experiment condition

All experiments were performed under an inert atmosphere using a standard glove box and using a Schlenk technique. Toluene, hexane, and tetrahydrofuran (THF) were distilled with benzophenoneketyl and used. Methylcyclohexane (anhydrous grade) used in the polymerization reaction was purchased from Tokyo Chemical Industry (TCI) and purified with a Na/K alloy and used. Sublimation grade HfCl₄ was purchased from Streme and used as is. An ethylene-propylene gas mixture was purified with trioctylaluminum (0.6 M in a mineral system) in a bomb reactor (2.0 L) and used.

¹H NMR(600 MHz) and ¹³C NMR(150 Mhz) spectra were recorded using an ECZ 600 instrument (JEOL).

GPC data were analyzed in 1,2,4-trichlorobenzene at 160°C using a PL-GPC 220 system equipped with a refractive index detector and two columns (PLarian Mixed-B 7.5 × 300 mm Varian [Polymer Lab]).

### Preparation Examples

### (1) Preparation of transition metal compound

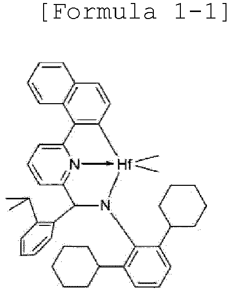

### (i) Preparation of ligand compound

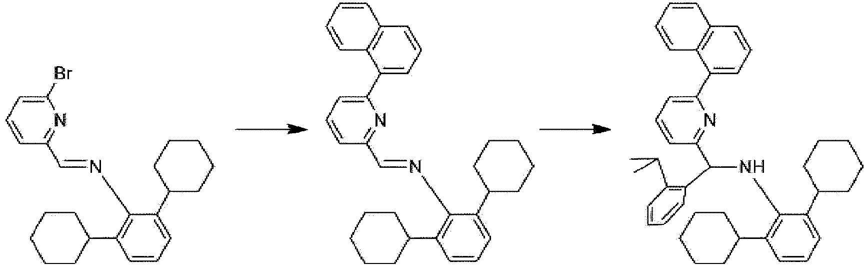

2,6-dicyclohexylaniline (0.772 g, 3.00 mmol) and 6-bromo-2-pyridinecarbox aldehyde (0.558 g, 3.00 mmol) were dissolved in toluene (5 mL) and molecular sieve was added thereto. The mixture was heated to 70°C overnight while being stirred. After the filtration, the solvent was removed from a rotary evaporator. A yellow solid was obtained (1.07 g, 84%).

¹H NMR(C₆D₆): δ 8.41(s, 1H, NCH), 8.09(d, *J* = 7.8 Hz, 1H), 7.53(m, 3H), 6.85(d, *J* = 7.8 Hz, 1H), 6.63(t, *J* = 7.8 Hz, 1H), 2.74(m, 2H), 1.87(d, *J* = 12 Hz, 4H), 1.64(d, *J* = 12.6 Hz, 4H), 1.54(d, *J* = 10.8 Hz, 2H), 1.39(quartet, *J* = 10.2 Hz, 4H), 1.11(m, 6H) ppm.

¹³C NMR(C₆D₆): δ 26.55, 27.33, 34.25, 39.30, 119.42, 124.32, 125.21, 129.83, 136.68, 138.82, 142.54, 148.94, 155.95, 162.06 ppm.

HRMS(EI): *m*/*z* calcd([M⁺] C₂₄H₂₉BrN₂) 424.1514. Found: 424.1516.

Under nitrogen, the compound (1.07 g, 2.51 mmol), 1-naphthyl boronic acid (0.453 g, 2.64 mmol), Na₂CO₃ (0.700 g, 6.60 mmol), and toluene (5 mL) filled a Schlenk flask. A solution of (Ph₃P)₄Pd(7.83 mg, 0.00678 mmol) was added to degassed H₂O/EtOH(1 mL, *v*/*v,* 1:1) and toluene (1 mL). Light yellow oil was obtained by column chromatography on silica gel using ethyl acetate (*v*/*v,* 90:3:1) containing hexane and a small amount of triethylamine (0.712 g, 60%).

¹H NMR(C₆D₆): δ 8.70 (s, 1H, NCH), 8.41(d, *J* = 7.8 Hz, 1H), 8.31(d, *J* = 7.8 Hz, 1H), 7.68(d, *J* = 7.2 Hz, 1H), 7.65(d, *J* = 7.8 Hz, 1H), 7.54(d, *J* = 7.2 Hz, 1H), 7.27(m, 4H), 7.20(m, 4H), 2.93(m, 2H), 1.90(d, *J* = 12 Hz, 4H), 1.61(d, *J* = 13.2 Hz, 4H), 1.50(d, *J* = 12.6 Hz, 2H), 1.38(m, 4H), 1.11(m, 6H), ppm.

¹³C NMR(C₆D₆): δ 26.63, 27.38, 34.35, 39.36, 119.21, 124.32, 124.98, 125.50, 126.15, 126.21, 126.64, 126.75, 128.15, 128.73, 129.38, 131.81, 134.52, 136.94, 137.14, 138.52, 149.48, 155.13, 159.79, 164.05 ppm.

HRMS(EI): *m*/*z* calcd([M⁺] C₃₄H₃₆N₂) 472.2878. Found: 472.2878.

2-isopropylphenyllithium (0.114 g, 0.904 mmol) dissolved in diethyl ether (8 mL) was added dropwise to a Schlenk flask containing the compound (0.247 g, 0.523 mmol) in diethyl ether (20 mL). Stirring was performed for 3 hours, and then an aqueous solution (10 mL) of ammonium chloride (0.30 g) was added, and the product was extracted with diethyl ether (3×10 mL). The resulting oil was dried at 60°C overnight at high vacuum. A yellow solid was obtained (0.257 g, 83%).

¹H NMR(C₆D₆): δ 8.24(m, 1H), 7.90 (m, 1H), 7.64(m, 1H), 7.62(d, *J* = 7.8 Hz, 1H), 7.56(d, *J* = 7.2 Hz, 1H), 7.26(m, 3H), 7.22(m, 4H), 7.11(m, 5H), 5.62(d, *J* = 5.4 Hz, 1H, NCH), 4.59(d, *J* = 5.4 Hz, 1H, NH), 3.31(septet, *J* = 7.2 Hz, 1H,CH), 2.74(m, 2H), 1.79(d, *J* = 7.8 Hz, 2H), 1.64 (m, 4H), 1.54(m, 4H), 1.32(m, 4H), 1.08(m, 2H), 1.03(d, *J* = 6.6 Hz, 3H, CH₃), 1.00(m, 1H), 0.980(d, *J* = 6.6 Hz, 3H, CH₃), 0.921(m, 3H) ppm.

¹³C NMR(C₆D₆): δ 23.78, 24.45, 26.63, 27.42, 27.54, 28.96, 34.77, 35.08, 39.01, 67.64, 119.99, 122.89, 124.13, 124.80, 125.36, 125.77, 126.08, 126.46, 126.56, 126.71, 127.58, 128.55, 129.35, 131.84, 134.64, 136.94, 138.77, 141.88, 142.24, 144.97, 146.32, 159.28, 163.74 ppm.

HRMS(EI): *m*/*z* calcd([M⁺] C₄₃H₄₈N₂) 592.3817. Found: 592.3819.

### (ii) Preparation of transition metal compound

To a Schlenk flask was filled with the ligand compound (0.150 g, 0.253 mmol) in toluene (1.5 g), and n-BuLi (0.17 mL, 1.6 M solution in hexane, 0.27 mmol) was added dropwise at room temperature. Stirring was performed for 1 hour, and then HfCl₄(0.0814 g, 0.254 mmol) was added as a solid. The reaction mixture was heated at 100°C, and stirred for 2 hours. After cooling was performed, MeMgBr (0.29 mL, 3.1 M solution in diethyl ether, 0.89 mmol) was added thereto, and stirred at room temperature overnight. After a volatile material was removed with a vacuum line, the product was extracted with toluene (1.5 g). The extract was obtained through cellite filtration. After the solvent was removed through a vacuum line, the residue was Triturated in hexane (2 mL) to obtain a yellow solid (0.128 g, 63%).

¹H NMR(C₆D₆): δ 8.58(d, *J* = 7.8 Hz, 1H), 8.29(d, *J* = 8.4 Hz, 1H), 7.79(d, *J* = 7.8 Hz, 1H), 7.71(d, *J* = 7.2 Hz, 1H), 7.54(d, *J* = 7.8 Hz, 1H), 7.46(m, 1H), 7.30(m, 2H), 7.15(m, 3H), 7.09(m, 3H), 6.88(t, *J* = 7.8 Hz, 1H), 6.62(d, *J* = 8.4 Hz, 1H), 6.48(s, 1H, NCH), 3.39(m, 1H), 2.92(m, 2H), 2.15(d, *J* = 13.8 Hz, 1H), 2.10(d, *J* = 13.8 Hz, 2H), 1.80(m, 2H), 1.65(m, 3H), 1.29(m, 6H), 1.17(d, *J* = 7.2 Hz, 3H, CH₃), 1.07(m, 3H), 0.99(s, 3H, HfCH₃), 0.95(m, 2H), 0.73(d, *J* = 7.2 Hz, 3H, CH₃), 0.70(s, 3H, HfCH₃), 0.23(m, 1H) ppm.

¹³C NMR(C₆D₆): δ 23.31, 25.04, 26.63, 26.74, 27.70, 27.76, 27.81, 28.29, 28.89, 35.00, 35.66, 36.62, 37.02, 38.13, 40.88, 62.53, 67.00, 77.27, 119.30, 120.30, 124.29, 125.52, 125.60, 125.97, 126.95, 127.06, 127.73, 129.91, 130.00, 130.09, 130.85, 134.36, 135.80, 140.73, 140.89, 144.02, 145.12, 146.31, 146.38, 146.49, 164.46, 170.79, 206.40 ppm.

Anal. calcd.(C₄₅H₅₂HfN₂): C, 67.61; H, 6.56; N, 3.50%. Found: C, 67.98; H, 6.88; N, 3.19%.

### (2) Preparation of organozinc compound

15.0 g (98.3 mmol) of 4-vinylbenzyl chloride and 2.628 g (108.1 mmol) of a magnesium metal were added to 78 ml of diethyl ether and stirred at 0°C for 1.0 hour, and then filtered on cellite to remove magnesium added in excess. 19.2 g (81.9 mmol) of p-tosyl-OCH₂CH₂Cl dissolved in 27 ml of diethyl ether was added dropwise to the prepared 4-vinylbenzyl-magnesium chloride (4-vinylbenzyl-MgCl) Grignard reagent. Stirring was performed overnight, and then filtration on cellite was performed to remove magnesium chloride tosylate (MgCl (OTs)), which is an insoluble salt. The filtered filter cake was washed three times with 70 ml of hexane, and the solvent was removed with a rotary evaporator to obtain 14.2 g of a crude product. 43 mg (3,000 ppm) of t-butylcatechol was added as a radical remover, and under full vacuum, vacuum distillation was performed at 85°C to obtain a compound represented by Formula 8-4-1 below. As a result of measuring the weight of the obtained compound, the yield was obtained at 81 wt%, and ¹H NMR and ¹³C NMR spectra were measured.

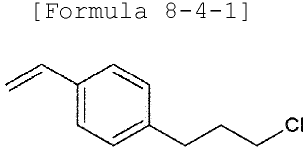

¹H NMR(C₆D₆): δ 7.20 (d, J = 8.4 Hz, 2H), 6.88 (d, J = 8.4 Hz, 2H), 6.61 (dd, J = 16, 9.6 Hz, 1H, =CH), 5.63 (d, J = 16 Hz, 1H, =CH₂), 5.09 (d, J = 9.6 Hz, 1H, =CH₂), 3.04 (t, J = 6.6 Hz, 2H, CH₂), 2.42 (t, J = 6.6 Hz, 2H, CH₂), 1.64 (quintet, J = 6.6 Hz, 2H, CH₂Cl) ppm.

¹³C NMR(C₆D₆): δ 32.61, 34.12, 44.07, 113.13, 126.74, 128.97, 135.99, 137.11, 140.63 ppm.

Thereafter, 10.0 g (55.3 mmol) of the prepared compound (4-(3-chloropropyl)styrene) represented by Formula 8-4-1 above was dissolved in a mixed solvent of 20 ml of toluene and 7.98 g (111 mmol) of tetrahydrofuran (THF), and was added dropwise at room temperature to a suspension in which 2.02 g (83.0 mmol) of magnesium powder was stirred in 40 mL of toluene. After stirring was performed for 5.0 hours, a slight heat was gradually generated, and then the reaction mixture was filtered on celite to remove magnesium added in excess. 6.94 g (55.3 mmol, 1 equivalent to Grignard reagent) of ethyl zinc methoxide produced by reacting 6.83 g (55.3 mmol) of diethyl zinc (Et₂Zn) and 1.78 g (55.3 mmol) of methanol in-situ in 30 ml of toluene at room temperature for 1.0 hour was added to the filtrate. Thereafter, 60 ml of toluene was added thereto, followed by stirring at room temperature for 1.0 hour, and then the solvent was removed using a high vacuum line. Thereafter, 96 g of hexane was added thereto, and magnesium chloridemethoxide (MgCl(OMe)), which is an insoluble salt, was removed on cellite. The filtrate was stored at -30°C to deposit a compound represented by Formula 5-4 as a white crystalline solid. As a result of measuring the weight, the yield was obtained at 56 wt% (7.28 g), and ¹H NMR and ¹³C NMR were measured.

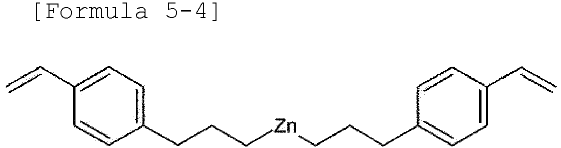

¹H NMR(C₆D₆): δ 7.24 (d, J = 7.8 Hz, 2H), 6.90 (d, J = 7.8 Hz, 2H), 6.64 (dd, J = 17, 11 Hz, 1H, =CH), 5.66 (d, J = 17 Hz, 1H, =CH₂), 5.11 (d, J = 11 Hz, 1H, =CH₂), 2.43 (t, J = 7.2 Hz, 2H, CH₂), 1.80 (quintet, J = 7.2 Hz, 2H, CH₂), -0.19 (t, J = 7.2 Hz, 2H, CH₂Zn) ppm.

¹³C NMR(C₆D₆): δ 12.66, 28.82, 40.09, 113.15, 127.31, 129.23, 136.05, 137.10, 142.91 ppm.

### (3) Preparation of anionic polymerization initiator

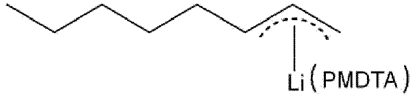

n-BuLi (0.14 mg, 2.2 mmol) was added dropwise to pentamethyldiethylenetriamine (PMDTA, 0.37 g, 2.2 mmol) in 1-octene (13.0 g). Stirring was performed overnight at room temperature, a yellow solution (0.16 mmol-Li/g) of pentylallyl-Li·(PMDTA) was obtained. The aliquot was analyzed by ¹H NMR spectroscopy. ¹H NMR spectrum was recorded, and then a solution of C₆D₆ was quenched with H₂O (or D₂O) and filtered in a pipette with a short pad of anhydrous MgSO4 to record ¹H NMR spectrum again.

### Preparation of polyolefin-polystyrene-based multi-block copolymer

### Example 1

A Parr reactor (3.785 L) was vacuum dried at 120°C for 2 hours. As a scavenger, a solution of MMAO (0.6 mg, 1,000 µmol-Al) in methylcyclohexane (1,200 g) was introduced into the reactor, and then the mixture was stirred at 120°C for 1 hour using a heating jacket, and thereafter, the solution was removed using a cannula.

The reactor was filled with methylcyclohexane (1,200 g) containing MMAO (1,000 µmol-Al) as a scavenger, and filled with 1-octene (560 g) as an alpha-olefin monomer, and then the temperature was set to 90°C. A solution of the organozinc compound (1,800 pmol) of Formula 5-4 above in methylcyclohexane (5 g) was filled as a chain transfer agent, and then a methylcyclohexane solution containing the transition metal compound (7 µmol-Hf) activated with [(C₁₈H₃₇)₂N(H)Me]⁺[B(C₆F₅)₄]⁻ (1.0 eq) in methylcyclohexane was injected. Polymerization was performed within the range of 90 to 120°C for 40 minutes while maintaining the pressure in the reactor at 25 bar by opening a valve of an ethylene tank. After the polymerization, ethylene gas was discharged and then the temperature of the reactor was adjusted to back to 90°C.

When the temperature reached 90°C, pentylallyl-Li·(PMDTA) (1,600 µmol) in methylcyclohexane (10 g) was added. The temperature was maintained at 90°C for 30 minutes during stirring, and then styrene (90 g) was injected. The temperature was adjusted in the range of 90 to 100°C using a heating jacket. The viscosity increased gradually and reached nearly non-visible conditions within 5 hours. An aliquot was taken for analysis by ¹H NMR spectroscopy. From the ¹H NMR analysis of an aliquot, complete conversion of styrene was confirmed. After the complete conversion of styrene, 2-ethylhexanoic acid and ethanol were continuously injected. An obtained polymer mass was dried overnight in a vacuum oven at 80°C.

### Examples 2 to 8

A multi-block copolymer was prepared in the same manner as in Example 1 except that the reaction conditions were changed as shown in Table 1 below.

### Example 9

A multi-block copolymer was prepared in the same manner as in Example 1 except that 1-hexene was used instead of 1-octene as the alpha-olefin monomer in Example 1, and that the reaction conditions were changed as shown in Table 1 below.

### Comparative Example 1

A multi-block copolymer was prepared in the same manner as in Example 1 except that diethyl zinc was used instead of the organozinc compound of Formula 5-4 above in Example 1, and that the reaction conditions were changed as shown in Table 1 below.

### Comparative Example 2

Me₃SiCH₂Li (2,600 µmol, 291.4 mg) and PMDETA (2,600 µmol, 537.3 mg) were mixed with methylcyclohexane (20.7 g) and then injected into the reactor, followed by stirring for 30 minutes. An anionic polymerization initiator was prepared by maintaining the stirring temperature at 90°C to 100°C.

A multi-block copolymer was prepared in the same manner as in Example 1 except that Me₃SiCH₂Li·(PMDETA) prepared above was used instead of pentylallyl-Li·(PMDTA) as the anionic initiator in Example 1, and that the reaction conditions were changed as shown in Table 1 below.

### Comparative Example 3

A multi-block copolymer was prepared in the same manner as in Example 1 except that Oc₃Al (1976.7 mg, 1,348 µmol-Al / 25wt% in hexane) was used instead of MMAO as the scavenger in Example 1, and that the reaction conditions were changed as shown in Table 1 below.

### Comparative Example 4

A multi-block copolymer was prepared in the same manner as in Example 1 except that 1-hexene was used instead of 1-octene as the alpha-olefin monomer in Example 1, and that the reaction conditions were changed as shown in Table 1 below.

**[Table 1]**

| | Cata lyst Inpu t amou nt (µmo l) | Scavenger | | Organ ozinc compo und (µmol ) | Alpha-olefin | | Sty ren e (g) | Polymerizati on initiator | |
|---|---|---|---|---|---|---|---|---|---|
| | | Type | Input amoun t (µmol ) | | Type | Inp ut amo unt (g) | | Type | Input amoun t (µmol ) |
| Example 1 | 7 | MMAO | 1,000 | 1,800 | 1-octene | 560 | 90 | Allyl-based | 1,600 |
| Example 2 | 7 | MMAO | 936 | 1,800 | 1-octene | 487 | 126 | Allyl-based | 1,600 |
| Example 3 | 7 | MMAO | 1,000 | 1,800 | 1-octene | 560 | 120 | Allyl-based | 1,600 |
| Example 4 | 7 | MMAO | 1,000 | 1,800 | 1-octene | 560 | 105 | Allyl-based | 1,600 |
| Example 5 | 7 | MMAO | 1,000 | 1,800 | 1-octene | 487 | 111 | Allyl-based | 1,600 |
| Example 6 | 6 | MMAO | 1,000 | 2,400 | 1-octene | 487 | 59 | Allyl-based | 2,100 |
| Example 7 | 6.25 | MMAO | 1,000 | 2,400 | 1-octene | 487 | 80 | Allyl-based | 2,100 |
| Example 8 | 10 | MMAO | 750 | 3,000 | 1-octene | 450 | 59 | Allyl-based | 2,600 |
| Example 9 | 12 | MMAO | 2,020 | 3,100 | 1-hexene | 560 | 104 | Allyl-based | 3,410 |
| Comparative Example 1 | 6 | MMAO | 1,000 | 1,800 | 1-octene | 560 | 86 | Allyl-based | 1,600 |
| Comparative Example 2 | 12 | MMAO | 1,000 | 3,100 | 1-octene | 560 | 98 | Silyl-based | 2,600 |
| Comparative Example 3 | 20 | TOA | 1,348 | 2,496 | 1-octene | 229 | 61 | Allyl-based | 2,746 |
| Comparative Example 4 | 6 | MMAO | 1,000 | 2,400 | 1-hexene | 590 | 59 | Allyl-based | 2,100 |

### Experimental Example 1

The physical properties of the polyolefin-polystyrene-based multi-block copolymer of each of Examples and Comparative Examples were measured as follows.

### (1) Measurement of contents of ethylene, alpha-olefin, and styrene

The measurement was performed through nuclear magnetic resonance (NMR). Using Bruker 600MHz AVANCE III HD NMR device, ¹H NMR was measured under the condition of ns=16, d1=3s, solvent=TCE-d2, and 373K, and then the TCE-d2 solvent peak was calibrated to 6.0 ppm. CH₃ of 1-propylene was confirmed at 1 ppm and a CH₃-related peak (triplet) of a butyl branch by 1-hexene was confirmed near 0.96 ppm to calculate the contents. In addition, the content of styrene was calculated using an aromatic peak near 6.5 to 7.5 ppm.

### (2) Weight average molecular weight (Mw, g/mol) and polydispersity index (PDI)

The weight average molecular weight (Mw, g/mol) and the number average molecular weight (Mn, g/mol) were measured by gel permeation chromatography (GPC), respectively, and the weight average molecular weight was divided by the number average molecular weight to calculate the polydispersity index (PDI).
- Column: PL Olexis
- Solvent: TCB(trichlorobenzene)
- Flow rate: 1.0 ml/min
- Sample concentration: 1.0 mg/ml
- Injection amount: 200 *µ*ℓ
- Column temperature: 160°C
- Detector: Agilent High Temperature RI detector
- Standard: Polystyrene
- Calculate molecular weight by Universal calibration using the Mark-Houwink equation (K = 40.8 × 10⁻⁵, α = 0.7057)
- Calculate molecular weight by Universal calibration using the Mark-Houwink equation (K = 40.8 × 10⁻⁵, α = 0.7057)

### (3) Fraction of homo-polystyrene

After a GPC chromatogram was prepared using gel permeation chromatography (GPC) for the multi-block copolymers of Examples and Comparative Examples, the ratio of the peak area represented by the homo-polystyrene to the total peak area represented by the styrene-based polymer is represented by % according to Equation 1 below. Fraction of homopolymer (area%) = Area of homo- polystyrene peak / (Area of polystyrene-based block peak + Area of homo-polystyrene peak) × 100 (%)

### GPC conditions

- Column: PL Olexis
- Solvent: TCB (trichlorobenzene)
- Flow rate: 1.0 ml/min
- Sample concentration: 1.0 mg/ml
- Injection amount: 200 *µ*ℓ
- Column temperature: 160°C
- Detector: Agilent High Temperature RI detector
- Standard: Polystyrene

**[Table 2]**

| | NMR (mol%) | | | NMR (wt%) | | | GPC | | |
|---|---|---|---|---|---|---|---|---|---|
| | Ethy lene | Alph a-olef in | Styr ene | Ethy lene | Alph a-olef in | Styr ene | Mw (g/mol) | PDI | Homo-PS (area %) |
| Example 1 | 75.2 | 16.4 | 8.4 | 43.5 | 37.9 | 18.1 | 158,412 | 1.68 | 1.10 |
| Example 2 | 70.7 | 13.6 | 15.6 | 38.6 | 29.8 | 31.6 | 192,397 | 1.60 | 1.36 |
| Example 3 | 76.0 | 15.7 | 8.3 | 44.8 | 37.1 | 18.1 | 155,283 | 1.64 | 0.87 |
| Example 4 | 79.0 | 12.2 | 8.8 | 49.2 | 30.4 | 20.4 | 125,432 | 1.77 | 1.65 |
| Example 5 | 77.1 | 13.7 | 9.3 | 46.4 | 32.9 | 20.7 | 161,520 | 1.62 | 1.25 |
| Example 6 | 72.7 | 12.8 | 14.5 | 44.1 | 23.3 | 32.6 | 158,149 | 1.79 | 3.78 |
| Example 7 | 74.7 | 13.7 | 11.6 | 47.0 | 25.9 | 27.3 | 169, 651 | 1.81 | 2.80 |
| Example 8 | 71.0 | 15.8 | 13.2 | 42.4 | 28.3 | 29.3 | 158, 988 | 1.99 | 2.13 |
| Example 9 | 73.0 | 15.3 | 11.7 | 45.0 | 28.3 | 26.7 | 145,506 | 1.86 | 1.15 |
| Comparative Example 1 | 74.6 | 12.6 | 12.7 | 43.2 | 29.3 | 27.4 | 58,104 | 1.39 | 8.92 |
| Comparative Example 2 | 77.5 | 12.4 | 10.1 | 47.0 | 30.2 | 22.7 | 90,772 | 1.93 | 4.57 |
| Comparative Example 3 | 73.7 | 9.9 | 16.4 | 42.3 | 22.7 | 34.9 | 61,310 | 1.71 | 4.67 |
| Comparative Example 4 | 75.5 | 16.3 | 13.4 | 43.3 | 28.1 | 28.6 | 107,369 | 1.95 | 4.11 |

### Experimental Example 2

### 1) Tensile strength, elongation, 300% modulus

In accordance with the tensile test method of ASTM D412, specimens were respectively prepared using the block copolymers prepared in Examples 1 to 8 and Comparative Examples 1 to 4 above, and the tensile strength, elongation, and 300% modulus of each specimen were measured.

### 2) Transparency (Haze)

A film (film thickness 140 µm) was prepared using each of the block copolymers prepared in Examples 1 to 8 and Comparative Examples 1 to 4 above under the following conditions using an E20T cast film forming machine of Collin Co., Ltd, and then the haze of the film was measured according to the ISO 14782 standard. At this time, 10 times of measurement per specimen were performed, and the average value thereof was taken.

### [Film formation conditions]

Screw rpm: 70 rpm
Processing temperature: 210 to 230°C
Chiller: 25°C
Dies: 100 mm

**[Table 3]**

| | Elongation (%) | Tensile strength (MPa) | 300% Modulus (MPa) | Transparenc y (Haze, %) |
|---|---|---|---|---|
| Example 1 | 2,494 | 17.6 | 1.6 | 30 |
| Example 2 | 1,482 | 23.8 | 3.1 | 32 |
| Example 3 | 2,432 | 18.0 | 1.8 | 27 |
| Example 4 | 1,992 | 24.0 | 3.2 | 28 |
| Example 5 | 2,011 | 22.2 | 2.5 | 29 |
| Example 6 | 1,200 | 21.0 | 5.7 | 35 |
| Example 7 | 1,307 | 22.6 | 4.1 | 32 |
| Example 8 | 1,585 | 26.6 | 2.8 | 30 |
| Example 9 | 1,772 | 21.9 | 2.3 | 32 |
| Comparative Example 1 | 1,632 | 15.3 | 2.7 | 55 |
| Comparative Example 2 | 1,905 | 7.9 | 1.9 | 45 |
| Comparative Example 3 | 785 | 6.9 | 4.5 | 43 |
| Comparative Example 4 | 1,050 | 20.0 | 5.7 | 42 |

As shown in Table 3, the block copolymers of Examples have excellent tensile strength and elongation and also exhibit a proper level of a 300% modulus value, so that it can be confirmed that all tensile properties are evenly excellent at above a certain level.

In comparison, it can be confirmed that the copolymers of Comparative Examples which do not satisfy all of the above conditions have poor values in all tensile properties of tensile strength, elongation, and 300% modulus.

From the results, it can be confirmed that the multi-block copolymer of the present invention, which satisfies the conditions wherein the fraction of a polystyrene homopolymer with respect to a polystyrene blocks is 4% or less, and the weight average molecular weight (Mw) measured from gel permeation chromatography (GPC) is 100,000 to 300,000 g/mol, has excellent tensile strength and elongation and also exhibits a proper level of a 300% modulus value, so that all tensile properties are evenly excellent.

## Claims

1. A multi-block copolymer comprising a polystyrene-based block including a repeating unit derived from an aromatic vinyl-based monomer and a polyolefin-based block including a repeating unit derived from an ethylene and a repeating unit derived from an alpha-olefin-based monomer, wherein:
the fraction of a polystyrene homopolymer represented by Equation 1 below and measured from gel permeation chromatography (GPC) with respect to the polystyrene-based block is 4% or less; and
the weight average molecular weight (Mw) measured from gel permeation chromatography (GPC) is 100,000 to 300,000 g/mol: Fraction of homopolymer (area%) = Area of homo- polystyrene peak / (Area of polystyrene-based block peak + Area of homo-polystyrene peak) × 100 (%)

2. The multi-block copolymer of claim 1, wherein the alpha-olefin-based monomer is one or more selected from the group consisting of 1-hexene, 1-octene, 1-decene, 1-undecene, 1-dodecene, 1-tetradecene, 1-hexadecene, 1-eicosen, 4,4-dimethyl-1-pentene, 4,4-diethyl-1-hexene, and 3,4-dimethyl-1-hexene.

3. The multi-block copolymer of claim 1, wherein the fraction of a polystyrene homopolymer with respect to the polystyrene-based block measured from the gel permeation chromatography (GPC) is 3.80% or less.

4. The multi-block copolymer of claim 1, wherein the molecular weight distribution measured from the gel permeation chromatography (GPC) is 1.5 to 3.0.

5. The multi-block copolymer of claim 1, wherein the content of a repeating unit derived from the alpha-olefin-based monomer as measured by ¹H NMR (500 MHz, tetrachloroethane-d2, standard material TMS) spectrum is 10 mol% to 20 mol%.

6. The multi-block copolymer of claim 1, wherein the content of the repeating unit derived from the alpha-olefin-based monomer as measured by ¹H NMR (500 MHz, tetrachloroethane-d2, standard material TMS) spectrum is 20 wt% to 40 wt%.

7. A method for producing the multi-block copolymer of claim 1, the method comprising:
(S1) preparing a polyolefin-based block by reacting ethylene and an alpha-olefin-based monomer using an organozinc compound as a chain transfer agent in the presence of a catalyst composition including a transition metal compound; and
(S2) preparing a multi-block copolymer by reacting an aromatic vinyl-based monomer with the polyolefin-based block in the presence of an anionic polymerization initiator.

8. The method of claim 7, wherein the transition metal compound is a compound represented by Formula 1 below: 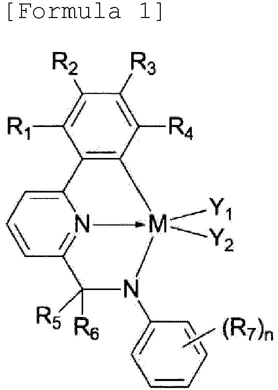
wherein in Formula 1 above,
M is Ti, Zr, or Hf;
R₁ to R₄ are each independently hydrogen, a substituted or unsubstituted C1 to C20 alkyl group, a substituted or unsubstituted C3 to C20 cycloalkyl group, or a substituted or unsubstituted C6 to C20 aryl group, wherein two or more adjacent ones thereof may be connected to each other and form a ring;
R₅ and R₆ are each independently hydrogen, a substituted or unsubstituted C1 to C20 alkyl group, a substituted or unsubstituted C3 to C20 cycloalkyl group, or a substituted or unsubstituted C6 to C20 aryl group, wherein the substitution is performed by a C1 to C12 alkyl group;
R₇ is each independently a substituted or unsubstituted C4 to C20 alkyl group, a substituted or unsubstituted C4 to C20 cycloalkyl group, or a substituted or unsubstituted C6 to C20 aryl group;
n is 1 to 5; and
Y₁ and Y₂ are each independently a halogen group, a C1 to C20 alkyl group, a C2 to C20 alkenyl group, a C2 to C20 alkynyl group, a C3 to C20 cycloalkyl group, a C6 to C20 aryl group, a C7 to C20 alkylaryl group, a C7 to C20 arylalkyl group, a C5 to C20 heteroaryl group, a C1 to C20 alkoxy group, a substituted or unsubstituted C5 to C20 aryloxy group, a C1 to C20 alkylamino group, a C5 to C20 arylamino group, a C1 to C20 alkylthio group, a C5 to C20 arylthio group, a C1 to C20 alkylsilyl group, a C5 to C20 arylsilyl group, a hydroxyl group, an amino group, a thiol group, a silyl group, a cyano group, or a nitro group.

9. The method of claim 7, wherein the organozinc compound is represented by Formula 5 below: 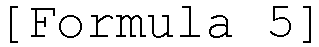 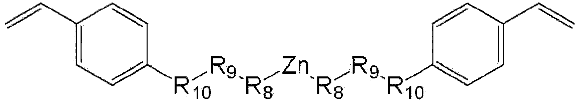
wherein in Formula 5 above,
R₈ and R₁₀ are each independently a single bond or a C1 to C10 alkylene group, R₉ is a C1 to C10 alkylene group or - SiR₁₁R₁₂-, and R₁₁ and R₁₂ are each independently a C1 to C10 alkyl group.

10. The method of claim 9, wherein the organozinc compound is prepared from the reaction of a Grignard reagent containing a styrene moiety with an alkyl zinc alkoxide.

11. The method of claim 10, wherein the Grignard reagent containing a styrene moiety is represented by Formula 7 below: 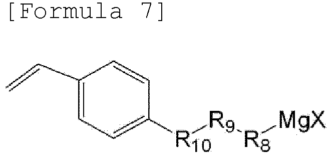
wherein in Formula 7 above,
R₈ and R₁₀ are each independently a single bond or a C1 to C10 alkylene group, R₉ is a C1 to C10 alkylene group or - SiR₁₁R₁₂-, R₁₁ and R₁₂ are each independently a C1 to C10 alkyl group, and X is a halogen group.

12. The method of claim 7, wherein the catalyst composition further comprises a compound represented by Formula 9 below:
[Formula 9] -[Al(Rₐ)-O]ₘ-
wherein in Formula 9 above,
Rₐ is each independently a halogen radical, a C1 to C20 hydrocarbyl radical, or a C1 to C20 hydrocarbyl radical substituted with halogen, and
m is an integer of 2 or greater.

13. The method of claim 7, wherein the anionic polymerization initiator comprises an alkyl lithium compound containing an allyl group, wherein the allyl group is combined with lithium.

14. The method of claim 13, wherein the alkyl lithium compound is represented by Formula 11 below: 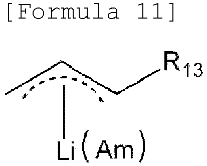
wherein in Formula 11 above,
R₁₃ is hydrogen or a C1 to C20 hydrocarbon, and
Am is an amine-based compound represented by Formula 12 below: 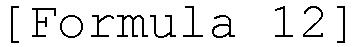 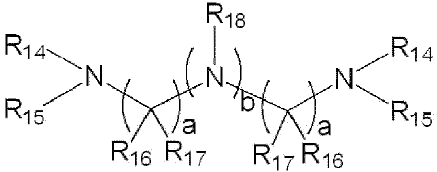
wherein in Formula 12 above,
R₁₄ to R₁₈ are each independently hydrogen or a C1 to C20 hydrocarbon, and
a and b are each independently an integer of 0 to 3, wherein the a and the b are not simultaneously 0.
